# EUROPÄISCHE PATENTSCHRIFT

(11) **EP 1 616 621 B1**
(45) Veröffentlichungstag und Bekanntmachung des Hinweises auf die Patenterteilung: **11.05.2011**
(21) Anmeldenummer: 04016525.0
(22) Anmeldetag: 14.07.2004
(51) Int. Cl.: B01J 19/18, C02F 3/08

(54) **Vorrichtung zur Fluidbehandlung**
Apparatus for treating fluids
Appareillage de traitement de fluides

(43) Veröffentlichungstag der Anmeldung: 18.01.2006
(73) Patentinhaber: GRUNDFOS A/S, 8850 Bjerringbro (DK)
(72) Erfinder: Rasmussen, Christian, Hammershoj 8830 Tjele (DK); Beldring, Finn, 2830 Virum (DK)
(74) Vertreter: Vollmann, Heiko

(56) Entgegenhaltungen:
- WO-A-02/094724
- DE-A- 2 405 106
- DE-A- 2 932 522

## Beschreibung

Die Erfindung betrifft eine Vorrichtung zur Fluidbehandlung gemäß den im Oberbegriff des Anspruchs 1 angegebenen Merkmalen.

Derartige Vorrichtung zählen zum Stand der Technik, sei es in Form von Filtern, welche Partikel bestimmter Größe zurückhalten oder in Form von biologischen Fluidbehandlungsvorrichtungen, bei denen ein Fluid längs einer mit Mikroorganismen behafteten Fläche geführt wird. Eine solche Vorrichtung ist beispielsweise aus WO 02/094724 A1 bekannt.

Ungeachtet, ob das zu behandelnde Fluid durch oder längs einer Fläche geführt wird, ergeben sich beim kontinuierlichen Betrieb Probleme dahingehend, dass der Strömungswiderstand durch ein Sichzusetzen der durchströmten Fläche bzw. durch Wachstum der behafteten Fläche zunimmt. Es ist deshalb erforderlich, in regelmäßigen Abständen eine Reinigung durchzuführen, um den Strömungswiderstand abzusenken. Dies wird bei Filtern typischerweise durch Rückspülen oder durch mechanisches Entfernen der Partikel bewerkstelligt, hat jedoch den Nachteil, dass das Verfahren diskontinuierlich abläuft und der Strömungswiderstand zwischen den einzelnen Reinigungszyklen zunimmt, d. h. also nicht konstant ist.

Bei Vorrichtungen zur biologischen Fluidbehandlung ist es zudem erforderlich, dass die an der Fläche anhaftenden Mikroorganismen nur so weit sie überschüssig sind entfernt werden, da der Verbleib von Mikroorganismen zwingend erforderlich für die weitere wirksame Fluidbehandlung ist. Bei der aus WO 02/094724 A1 bekannten Vorrichtung wird dies dadurch erzielt, dass die miteinander kämmenden; Scheibenstapel in Teilbereichen radialer Stege einander fast berühren, so dass diese Stege ständig den Materialbelag der gegenüberliegenden Scheibe auf der ganzen Fläche abtragen. Eine Anlagerung kann daher im Wesentlichen nur in den vertieften Bereichen zwischen den Stegen erfolgen, wodurch die aktive Fläche der Scheiben verringert ist, Ein weiterer Nachteil dieser Anordnung ist, dass nur der Überschuss des angewachsenen Mikroorganismusmaterials abgetragen wird, wohingegen; Im Grund keine Erneuerung erfolgt, was dazu führen kann; dass die Vor richtung im Laufe der Zeit in ihrer Wirksamkeit nachlässt.

Aus DE 2 932 522 A1 ist eine gattungsbildende Vorrichtung bekannt bei welcher das Fluid längs eines Plattenstapels bzw. durch diesen hindurch geführt wird, dessen Flächen mit biologisch aktivem Material behaftet sind. Der Plattenstapel liegt drehbar in einer Wanne, durch weiche das zu behandelnde Abwasser geleitet wird. Um das an den Platten wachsende biologische Material kontinuierlich zu entfernen, sind Abstreifer vorgesehen, welche ortsfest angeordnet sind und die mit ihrer Breitseite das an gegenüberliegenden Flächen benachbarter Platten angelagerte biologische Material abtragen. Dabei erfolgt der Abtrag über, die gesamte radiale Erstreckung der Scheiben und mit jeder Umdrehung des Scheibenstapels nahezu vollständig. Ein Transport des abgetragenen Materials erfolgt längs der Abstreifer durch Schwerkraft zur Mitte des Scheibenstapels hin, wo es von der den Behälter durchströmenden Flüssigkeit aufgenommen und mit abgeführt werden muss. Darüber hinaus kann dort ein vollständiger Abtrag durch die Abstreifer nicht erfolgen, da dann nicht genügend biologische Masse zur nachfolgendes Fluidbehandiung zur Verfügung stehen würde.

Vor diesem Hintergrund liegt der Erfindung die Aufgabe zugrunde, eine gattungsgemäße Vorrichtung zur Fluidbeharidlung so auszubilden, dass die vorgenannten Nachteile vermieden werden, insbesondere das an der Fläche anhaftende Material kontinuierlich und nach Möglichkeit vollständig ausgetauscht wird, um auch über lange Zeit eine gleichbleibende Aktivität der Vorrichtung bei möglichst konstanten, Durchströmungswiderstand zu gewährleisten.

Diese Aufgabe wird gemäß der Erfindung durch die in Anspruch 1 angegebenen Merkmale gelöst. Vorteilhafte Ausgestaltung der Erfindung sind in den Unteransprüchen, der nachfolgenden Beschreibung und den Figuren angegeben.

Die erfindungsgemäße Vorrichtung zur Fluidbehandlung bei der das Fluid längs einer oder durch zumindest eine mit Material behaftete Fläche geführt wird, weist mindestens ein Abstreiforgan auf welches die Fläche bahnweise überstreicht, wobei der Bahnverlauf so gewählt ist, dass die behaftete Fläche abschnittsweise nacheinander überstrichen wird. Der Grundgedanke der vorliegenden Erfindung ist es also die materialbehaftete Fläche sei es ein Filter oder eine mit biologische Material (z. B. Mikroorganismen) behaftete Flache, mit einem Abstreiforgan bahnweise zu behandeln, d. h. immer nur einen Teil dieser Fläche mit dem Abstreiforgan zu überstreichen. Besonders vorteilhaft können die Abstreiforgane zur Reinigung von Ablagerungen auf Osmosefiltern zur Fluidbehandlung eingesetzt werden. Dabei wird das Abstteiforgan immer auf einer Bahn geführt, deren Verlauf so gewählt ist dass- die behaftete Fläche abschnittsweise nacheinander, Insgesamt jedoch möglichst vollständig überstrichen wird. Die behaftete Fläche kann also kontinuierlich und bis auf den Grund durch ein oder mehrere Abstreiforgane von anhaftendem Material befreit werden. Da immer nur eine abschnittsweise Anwendung des Abstreiforgans erfolgt, ist sichergestellt, dass nur ein Teil der Fläche von anhaftendern Material befreit wird, so dass das Material im Bereich neben der Bahn, also der übrigen Fläche dort verbleibt. Hierdurch kann bei geeigneter Ausbildung des Abstreiforgans zum einen ein Materialabtrag bis zum Grund der Fläche erfolgen, d. h., es können auch untenliegende ältere Materialchichten abgetragen werden. Zum anderen kann bei entsprechendem Bahnverlauf eine kontinuierliche Abstreifung während des Betriebs erfolgen, so dass ein völlig kontinuierliches Behandlungsverfahren möglich ist, und der Durchströmungswiderstand stets im Wesentlichen gleich bleibt.

Gemäß der Erfindung ist ein Abstreiforgan so ausgebildet, dass es eine Schmalseite und eine Breitseite aufweist und auf Bahnabschnitten derart geführt, dass es abwechselnd auf einem Bahnabschnitt in einer ersten Richtung im Wesentlichen mit seiner Breitseite abstreift und dann auf einem Bahnabschnitt einer zweiten Richtung im Wesentlichen mit seiner Schmalseite bewegt wird. Hierdurch kann ein gezielter Materialtransport über die Fläche erzielt werden, wobei eine solche Bewegung konstruktiv vergleichsweise einfach realisierbar ist, wie weiter unten noch einmal im Einzelnen ausgeführt ist.

Vorteilhaft sind mehrere Abstreiforgane vorgesehen, die unterschiedliche Bahnabschnitte überstreichen, die vorzugsweise miteinander bewegungsgekuppelt sind. Eine solche Anordnung hat den Vorteil, dass aufgrund der Vielzahl von Abstreiforganen bei geeigneter Bahnanordnung nur eine vergleichsweise kleine Bewegung auszuführen ist; was konstruktiv und antriebstechnisch von Vorteil ist.

Der oder die Abstreiforgane können entweder zum Reinigen einer Filterfläche, d. h. zum bahnweisen Entfernen der auf der Filteroberfläche abgelagerten Sedimente oder aber zum Entfernen biologischen Materials einer Fläche dienen, wie sie bei biologischen Filtern typischerweise längs angeströmt ist.

Die materialbehaftete Fläche kann grundsätzlich beliebige Formen haben, bei Filtern handelt es sich üblicherweise um ebene Flächen, es können jedoch auch die Mantelfläche eines Zylinders eine solche Fläche bilden, dann ist es zweckmäßig, die Breitseite der Abstreiforgane so anzuordnen, dass diese im Wesentlichen parallel zur Zylinderachse verlaufen. Eine solche Zylindermantelfläche kann sowohl Fläche eines biologischen Filters als auch eines mechanischen Filters (nach Art einer Siebtrommel) bilden.

Die erfindungsgemäße Vorrichtung beschränkt sich nicht auf Anwendungen in der Abwassertechnik, sondern kann auch in anderen Bereichen eingesetzt werden, beispielsweise in Form eines chemischen Reaktors, bei dem durch die Abstreifer Reaktionsprodukte entfernt werden oder ggf. auch andere Ablagerungen, beispie,lsweise um eine Katalysatorfläche zu reinigen. Der Reaktor kann sowohl von gasförmigen als auch von flüssigen Stoffen durchströmt sein, wobei die Abstreiforgane feste, pulvrige, pastöse oder flüssige Stoffe entfernen.

Zur biologischen Abwasserbehandlung der eingangs genannten Art ist es besonders vorteilhaft, wenn die materialbehaftete Fläche durch ihre relativ zueinander bewegbare Seiten von Scheiben gebildet wird, wobei einer, vorzugsweise jedoch jeder Scheibenseite mindestens ein Abstreiforgan zugeordnet ist, so dass die Abstreiforgane an gegenüberliegenden Seiten benachbarter Scheiben gegenseitig für Materialabtrag sorgen. Über die Relativbewegung der Scheiben zueinander wird dann die Bewegung der Abstreiforgane längs der Scheibenseiten also der Bahnverlauf gesteuert. Dabei kann durch geeignete Anordnung der Abstreiforgane und Wahl der Drehrichtung der Scheiben der Materialtransport benachbarter Scheiben ggf. in unterschiedlicher Richtung erfolgen, was dann von besonderer Bedeutung ist, wenn auf benachbarten Scheiben unterschiedliche Reaktionsprodukte abzuführen sind.

Um eine möglichst hohe Packungsdichte zu erzielen, d. h. auf kleinem Raum eine möglichst große materialbehaftete und somit biologisch wirksame Fläche zu erhalten, ist es besonders günstig, Scheiben parallel zueinander mit Abstand anzuordnen, derart, dass die Abstreiforgane zwischen benachbarten Scheiben wirksam sind. Aufgrund der Parallelität der Scheiben sind dann die gegenseitig wirksamen Abstreiforgane ständig im Eingriff, d. h. sie üben Abstreiffunktionen aus, sobald die Scheiben relativ zueinander bewegt werden.

Die Abstreiforgane selbst können in vorteilhafter Weise durch Abstreifer gebildet sein, die sich im Wesentlichen senkrecht von einer Scheibe in Richtung auf die gegenüberliegende Scheibe erstrecken, so dass ihre zur gegenüberliegenden Seite gerichtete Kante auf dieser gegenüberliegenden Seite Material abstreift. Eine solche Abstreiferausbildung ist insbesondere bei Anordnung mehrerer Abstreifer vorteilhaft, da zumindest dann, wenn ein Abstreifen bis zum Grund der gegenüberliegenden Scheibenseite erfolgen soll, die Abstreifer gleichzeitig zum Abstandhalten benachbarter Scheiben dienen können.

Um zu erreichen, dass mit den Abstreifern abschnittsweise die gesamten Scheibenfläche überstrichen wird, und dabei ein gezielter Materialtransport des abgetragenen Materials erfolgt, ist es vorteilhaft, wenn benachbarte Scheiben zueinander nicht nur rotatorisch, sondern auch translatorisch bewegt werden und entsprechend angetrieben sind. Dabei erfolgt die Bewegung vorteilhaft in Ebenen parallel zu den parallel zueinander angeordneten Scheiben.

Von Vorteil ist es, wenn benachbarte Scheiben derart zueinander bewegt werden, dass ein Abstreiforgan auf der gegenüberliegenden Scheibe mit einer Breitseite eine im Wesentlichen radiale Arbeitsbahn beschreibt und nachfolgend mit seiner Schmalseite eine Rückführbahn ausführt oder umgekehrt. Dabei sollte der Anfang der Rückführbahn und das Ende der Arbeitsbahn auf demselben Scheibenradius liegen und umgekehrt. Durch die im Wesentlichen radial gerichtete Bewegung mit der Breitseite erfolgt der Materialtransport von innen nach außen oder bevorzug von außen nach innen. Die Rückführbewegung hingegen erfolgt im Wesentlichen mit der Schmalseite, so dass das bereits transportierte Material oder auch das auf der Scheibe noch befindliche durch das Rückführen praktisch nicht bewegt wird, da die Schmalseite eher einen Schnitt durch das Material vollzieht als einen Materialtransport. Damit ist sichergestellt, dass ein Abstreiforgan Material von einem Radius zum anderen Radius transportiert. Die Anordnung der Abstreiforgane auf einer Scheibe ist dabei zweckmäßigerweise so gewählt, dass sich die dann ergebenen ringförmigen Abstreifbereiche, welche durch im Wesentlichen radial verlaufende Bahnen gebildet sind, überschneiden, so dass letztlich über alle Abstreiferorgane ein radialer Materialtransport von außen nach innen oder von innen nach außen erfolgt, je nach Anordnung der Abstreifer und Bewegungsablauf der Scheiben.

Um den vorgenannten Bewegungsablauf zu erzielen, ist es zweckmäßig, ein oder mehrere Abstreiforgane auf hypozykloiden oder epizykloiden Bahnen über die Scheibe zu führen, wie dies weiter unten noch im Einzelnen beschrieben ist.

Wenn mehrere Abstreiforgane auf hypozykloiden bzw. epizykloiden Bahnen auf unterschiedlichen Radien über die Scheibe geführt sind, ist es zweckmäßig die Bahnverläufe so zu legen, dass die hypozykloiden bzw. epizykloiden Bahnen in einander anschließenden überlappenden Ringabschnitten verlaufen. Dann kann ein effektiver Materialtransport von einem Scheibendurchmesser zum anderen Scheibendurchmesser erfolgen, indem das Material zunächst über einen Ringabschnitt transportiert und dann in entsprechender Weise im nächsten Ringabschnitt übernommen und weiter transportiert wird. Für eine biologische Fluidbehandlung ist insbesondere eine von außen nach innen gerichtete Hauptbewegungsrichtung vorteilhaft, wobei zweckmäßigerweise auch die Strömungsrichtung des Fluids in diese Richtung verlaufen sollte. Dann können die sich von der Scheibe lösende Materialteile mit dem Fluidstrom abtransportiert, d. h. entfernt werden, ohne dass die Gefahr besteht, dass diese sich an einer in Materialtransportrichtung zurückliegendem Bereich einer Scheibe festsetzen.

Um auf kleinem Raum eine möglichst große, mit Material behaftete Fläche zur Fluidbehandlung realisieren zu können, ist in einer Weiterbildung der Erfindung vorgesehen, mindestens zwei Scheibenstapel so anzuordnen, dass eine Scheibe des einen Stapels mindestens zu einer Scheibe des anderen Stapels benachbart ist, wobei zwischen diesen benachbarten Scheiben der Scheibenstapel ein zu behandelndes Fluid geführt ist. Zwischen benachbarten Scheiben befinden sich darüber hinaus die Abstreiforgane, die jeweils von der einen Scheibe ausgehend zur gegenüberliegenden reichen und durch abschnittsweisen Materialabtrag kanalbildend wirken.

Dabei sind die Scheiben vorteilhaft ringförmig ausgebildet, so dass das Fluid durch die zentralen Ausnehmungen in den Scheiben zu- oder abgeführt werden kann und im Übrigen zwischen den Scheiben strömt. Vorteilhaft werden benachbarte Scheiben bzw. Scheibenstapel gleichsinnig, jedoch mit unterschiedlicher Drehgeschwindigkeit angetrieben.

Die vorgenannten Bewegungsabläufe der Abstreiforgane, insbesondere die hypozykloiden oder epizykloiden Bahnen können konstruktiv einfach dadurch erreicht werden, dass benachbart zueinander liegende Scheiben exzentrisch zueinander gelagert und angetrieben sind. Dabei sind die Scheiben der ineinandergreifenden Stapel vorteilhaft ringförmig ausgebildet und weisen unterschiedliche Außendurchmesser bei vorzugsweise gleicher radialer Ringbreite auf. Sie sind jeweils drehbar gelagert und werden mit gleicher Umfangsgeschwindigkeit angetrieben, so dass aufgrund der voneinander abweichenden Drehachsen sowie der unterschiedlichen Außendurchmesser die Scheiben beider Stapel unterschiedliche Winkelgeschwindigkeit trotz gleicher Umfangsgeschwindigkeit aufweisen. Hierdurch erfolgt zwangsläufig eine translatorische und rotatorische Relativbewegung der Scheibenstapel zueinander, welcher epizykloide oder hypozykloide Bahnen der Abstreiforgane auf den Scheiben erzeugt.

Konstruktiv besonders günstig ist es, wenn mindestens die Scheiben eines Stapels eine stirnseitige Außenverzahnung aufweisen, da dann ein rotatorischer Antrieb durch ein an dieser Außenverzahnung angreifendes Stirnrad in konstruktiv einfacher Weise realisiert werden kann. Auch können bei einer solchen Verzahnung mit geringem Aufwand benachbart angeordnete Scheibenstapel mit angetrieben werden, in dem diese entweder in direktem Eingriff mit einem benachbarten Scheibestapel gebracht werden oder über entsprechende Stirnräder miteinander bewegungsgekoppelt werden.

Besonders vorteilhaft ist es, wenn mindestens eine, vorzugsweise alle Scheiben eines Stapels nahe der Außenverzahnung an einem seitlich vorspringendem Bereich eine stirnseitige Innenverzahnung aufweisen, mit der die Außenverzahnung mindestens einer Scheibe des anderen Scheibenstapels kämmt. Eine solche Anordnung ermöglicht den Aufbau von Scheibenstapeln mit nur zwei unterschiedlichen Scheibentypen, nämlich einer Scheibe mit vergleichsweise großem Durchmesser mit Außenverzahnung sowie seitlichem Vorsprung und Innenverzahnung und einer Scheibe kleineren Durchmessers nur mit Außenverzahnung. Beide Scheiben sind ringförmig ausgebildet und können in dieser Antriebspaarung praktisch zu beliebig großen Stapeln vereinigt werden, ohne dass scheibenseitig konstruktive Änderungen vorzusehen sind. Dann sind auch alle Scheiben mit einer Verzahnung versehen und können über diese Verzahnung direkt und unabhängig von der benachbarten Scheibe angetrieben werden.

Grundsätzlich kann die Außenverzahnung über ein oder auch mehrere stirnverzahnte Antriebsräder angetrieben sein. Besonders vorteilhaft ist es, wenn zwei zueinander winkelversetzte Antriebsräder vorgesehen sind, da dann in Verbindung mit einer drehbaren Abstützung der Scheiben an Innenumfang, vorzugsweise gegenüberliegend zum Antriebseingriff eine stabile Dreipunktlagerung gegeben ist, die keiner weiteren Führung bedarf.

Die Abstreifer sind vorteilhaft so auf der Scheibe angeordnet, dass ihre Breitseite mit einer Radialen einen im Wesentlichen konstanten Winkel von vorzugsweise 30° bis 60° einschließt.

Zweckmäßigerweise sind die Abstreifer benachbarter Scheiben um 90° zueinander versetzt ausgebildet, dies ist insbesondere auch im Hinblick auf eine Kollision von Abstreifern benachbarter Scheiben von Vorteil, da dann sichergestellt ist, dass stets eine Breitseite eines Abstreifers einer Scheibe mit der Schmalseite eines Abstreifers der benachbarten Scheibe kollidiert und nicht zwei Breit- oder zwei Schmalseiten aufeinander stoßen, was möglicherweise zu unzulässig hohen Krafteinwirkungen führen könnte.

Bevorzugt sind in Bewegungsrichtung hinter jedem Abstreifer etwa parallel dazu Durchbrechungen in der Scheibe vorgesehen, um einen Druckausgleich hinter dem Abstreifer zu ermöglichen. Bevorzugt liegt ein Abstreifer stets zwischen zwei Durchbrechungen, da der Abstreifer dann im Bereich eines dazwischen verbleibenden Steges angeordnet ist, der aufgrund der Materialschwächung vor und hinter dem Abstreifer diesem eine gewisse Beweglichkeit gibt, was insbesondere bei Kollisionen mit einem gegenüberliegend angeordnetem Abstreifer von Vorteil ist, da damit ein gewisses Ausweichen ermöglicht wird.

Die Abstreifer sind vorteilhaft so ausgebildet, dass sie bis zur benachbarten Scheibe reichen, d. h. die Höhen der Abstreifer bestimmen den Abstand benachbarter Scheiben. Es ist also keine gesonderte Lagerung vorgesehen, welche den axialen Abstand der Scheiben zueinander festlegt, diese können vielmehr aneinander liegend gestapelt werden, wobei durch die Höhe der Abstreifer der Abstand der Scheiben zueinander festgelegt ist. Es ist also lediglich für eine endseitige Abstützung zu sorgen, im Übrigen sind die aneinander liegenden Scheiben lediglich über die zentralen Durchbrechungen drehbar abzustützen und über einen Zahntrieb an der Außenseite anzutreiben.

Um zu verhindern, dass Abstreifer benachbarter Scheiben bei ihrer Kollision beschädigt werden oder abbrechen, ist gemäß einer Weiterbildung der Erfindung vorgesehen, die Abstreifer auf ihrer in Bewegungsrichtung frontseitigen Schmalseite und vorzugsweise auch rückseitigen Schmalseiten abgeschrägt auszubilden. Wenn dann, wie vorbeschrieben, die Abstreifer benachbarter Scheiben um 90° zueinander versetzt angeordnet sind und zudem durch Ausnehmungen vor und hinter den Abstreifern eine Materialschwächung in der Scheibe erfolgt, dann kann bei Kollision zweier Abstreifer ein gezieltes Ausweichen stattfinden, indem durch die Schräge als Auflauffläche der dazu mit seiner Breitseite quer auflaufende Abstreifer entgegen Bewegungsrichtung abgebogen wird und darüber hinaus aus der Scheibe ausweicht.

Vorteilhaft ist eine Scheibe mit den daran ausgebildeten Abstreifern und den Antriebsverzahnungen einstückig als Kunststoffspritzteil ausgebildet und vorzugsweise aus Poloethylen oder Polopropylen hergestellt. Es können somit mit nur zwei Werkzeugen Scheibenstapel praktisch beliebiger Größe hergestellt werden.

Diese Scheibenstapel werden typischerweise zur biologischen Abwasserbehandlung in einem entsprechenden Reaktor eingesetzt, wobei die Abstreiforgane dafür sorgen, dass der biologische Materialzuwachs abschnittsweise entfernt wird. Die Bahnführung ist dabei so gestaltet, dass im Laufe der hypozykloiden bzw. epizykloiden Bahnen jede Scheibe im Laufe der Zeit praktisch vollständig von den Abstreifern überstrichen wird, allerdings ist die Anordnung der Abstreifer und die Geschwindigkeit der Bewegung so ausgerichtet, dass stets ausreichend biologisches Material an den Scheiben verbleibt, um das dazwischen geführte Fluid zu behandeln, andererseits aber genügend Material abgestreift wird, um ein Sichzusetzen des Reaktors zu verhindern.

Die Scheiben können darüber hinaus Vertiefungen, Verwerfungen oder andere Ausbildungen in Form von Kanälen, Strukturen oder Oberflächenrauhigkeiten aufweisen, die u. a. verhindern, dass die Wachstumsgrundlage der Mikroorganismen gänzlich entfernt wird. Die Scheibenstapel werden vorteilhaft innerhalb eines geschlossenen Reaktors angeordnet, wobei die Getriebemittel für den Bewegungsablauf der Abstreiforgane zweckmäßigerweise innerhalb des Reaktors und die Antriebsmittel außerhalb angeordnet sind. Die Antriebsmittel können jedoch auch innerhalb des Reaktors liegen. Alternativ können die Getriebemittel auch außerhalb des Reaktors liegen, was insbesondere dann vorteilhaft ist, wenn zu erwarten ist, dass mit der Flüssigkeit auch größere Sedimente mitgeführt werden, welche die Getriebefunktion beeinträchtigen könnten.

Alternativ zu der vorbeschriebenen Scheibenstapelanordnung, bei der beide Scheibenstapel relativ zueinander translatorisch und rotatorisch bewegt werden, wobei die Drehrichtung gleich, jedoch die Drehgeschwindigkeit unterschiedlich ist, kann eine solche oder ähnliche Bewegungsablauf auch dadurch erzielt werden, dass ein Scheibenstapel stationär innerhalb des Reaktors angeordnet und der andere entsprechend rotatorisch und translatorisch angetrieben ist.

Die Erfindung ist nachfolgend anhand von in der Zeichnung dargestellten Ausführungsbeispielen näher erläutert. Es zeigen:
- Fig. 1: in schematischer Darstellung den Bewegungsablauf von Abstreifern auf einer ringförmigen Scheibe,
- Fig. 2: den Bewegungsablauf von Abstreifern auf einem Zylindermantel,
- Fig. 3: in stark vereinfachter schematischer Darstellung Antrieb und Lagerung zweier benachbarter relativ zueinander bewegbarer Scheiben,
- Fig. 4: die Anordnung der Scheiben in Fig. 3 zueinander in anderer perspektivischer Darstellung,
- Fig. 5: eine Scheibe mit Außenverzahnung und Innenverzahnung in Darstellung nach Fig. 3 sowie die Anordnung von Abstreifern in vergrößerter Darstellung,
- Fig. 6: Lagerung und Antrieb eines Scheibenstapels in Darstellung nach Fig. 3,
- Fig. 7: eine alternative Lagerung/alternativer Antrieb in Darstellung nach Fig. 3,
- Fig. 8: den Antrieb zweier Scheibenstapel mit einem gemeinsamen Antriebsstirnrad in Darstellung nach Fig. 3,
- Fig. 9: in perspektivischer Darstellung einen Reaktor mit darin befindlichen Scheibenstapeln,
- Fig. 10: einen Teilquerschnitt des Reaktors nach Fig. 9 im Bereich der Antriebsdurchführung,
- Fig. 11: eine Stirnansicht des Reaktors nach Fig. 9 mit abgenommenem vorderen Deckel,
- Fig. 12: den Bahnverlauf zweier Abstreifer auf einer inneren und einer äußeren epizykloiden Bahn,
- Fig. 13: den Bahnverlauf zweier Abstreifer auf einer inneren und einer äußeren einer hypozykloiden Bahn und
- Fig. 14: den Bahnverlauf von Abstreifern gegenüberliegender Scheiben.

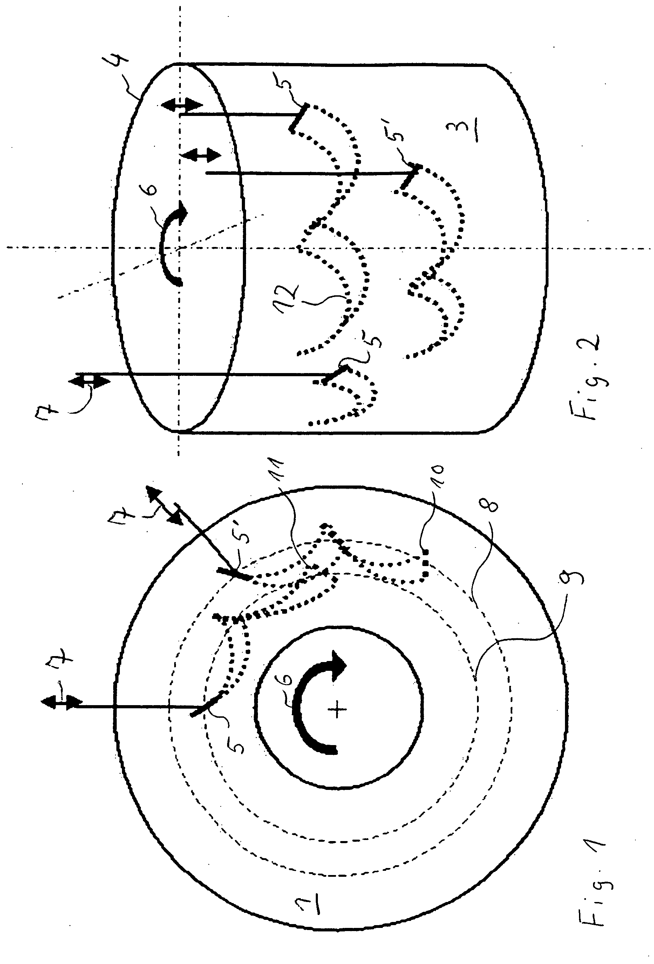

Anhand der Fig. 1 und 2 ist schematisch dargestellt, wie ein Abstreiforgan in Form eines Abstreifers 5 auf einer ebenen Fläche 1 einer Scheibe 2 bzw. auf einer gekrümmten Fläche 3 eines Zylinders 4 zu bewegen ist, damit die behaftete Fläche 1 bzw. 3 abschnittsweise vom Abstreifer 5 überstrichen wird, um an der Fläche 1, 3 anhaftendes Material zu entfernen und abzutransportieren. Bei der in Fig. 1 dargestellten Scheibe 2 erfolgt eine Rotation der Scheibe in Drehrichtung 6, darüber hinaus eine translatorische Bewegung der Abstreifer 5 in radialer Richtung 7. Von den Abstreifern sind hier zwei beispielhaft eingezeichnet, wobei der Abstreifer 5' Material von einem äußeren Radius 8 zu einem inneren Radius 9 fördert und der Abstreifer 5 vom inneren Radius 9 weiter nach innen fördert, also das vom äußeren Abstreifer 5' zum Radius 9 geschobene Material weiter nach innen transportiert. Die Drehgeschwindigkeit der Scheibe 1 in Richtung 6 sowie die translatorische Bewegung der Abstreifer 5 in Richtung 7, einmal nach außen sowie nachfolgend nach innen ist so aufeinander abgestimmt, dass sich die in Fig. 1 dargestellten Kurven 10 und 11 ergeben.

Wie die Kurve 10 verdeutlicht, schiebt der Abstreifer 5' zunächst im Wesentlichen mit seiner Breitseite Material vom Radius 8 zum Radius 9, um dann im Wesentlichen mit seiner Schmalseite durch das Material schneidend auf einer Rückführbahn geführt zu werden, auf der er zum Radius 8 gelangt, von wo wiederum der Abstreifvorgang mit der Breitseite zum Radius 9 erfolgt. Dort, wo die zweite wiederholende Bahn des Schiebers 5' den Radius 9 erreicht, wird das Material dann vom Schieber 5 übernommen, der ebenfalls nun mit seiner Breitseite zunächst im Wesentlichen das Material radial nach innen fördert, um dann mit seiner Schmalseite wieder zurück auf den Radius 9 zu gelangen. Es versteht sich, dass bei geeigneter Anordnung entsprechender Abstreifer 5 ein Materialtransport über die gesamte Fläche der Scheibe 1 nach innen erfolgen kann, und zwar abschnittsweise und jeweils auf Bahnen, wie sie in Fig. 1 durch die Bahnen 10 und 11 beispielhaft dargestellt sind. Fig. 2 zeigt das erfindungsgemäße System anhand eines Zylinders 4. Der Zylinder dreht in Drehrichtung 6, die Abstreifer 5 bzw. 5' werden translatorisch in Richtung 7 parallel zur Zylinderachse bewegt, und zwar abwechselnd nach oben und nach unten, so dass bei entsprechender Bewegungskopplung Bahnverläufe 12 entstehen, die ähnlich denen anhand von Fig. 2 dargestellt sind. Bei der Ausführung nach Fig. 2 erfolgt ein Materialtransport auf der gekrümmten Fläche 3 des Zylinders 4 von unten nach oben, wobei der Bahnverlauf so ist, dass ein Abstreifer zunächst im Wesentlichen mit seiner Schmalseite eine Rückführbewegung nach unten macht, um dann mit seiner Breitseite wiederum nach oben zu schieben und dabei das an der Zylinderfläche 3 anhaftende Material mitzunehmen. Auch hier werden die Abstreifer 5, 5' und weitere Abstreifer so angeordnet, dass der Materialabtrag von einem unteren Abstreifer durch den nächst darüber liegenden übernommen werden kann. Die Anzahl der zum vollständigen Abstreifen der Fläche 3 erforderlichen Abstreifer 5 ist also abhängig vom Hub der translatorischen Bewegung.

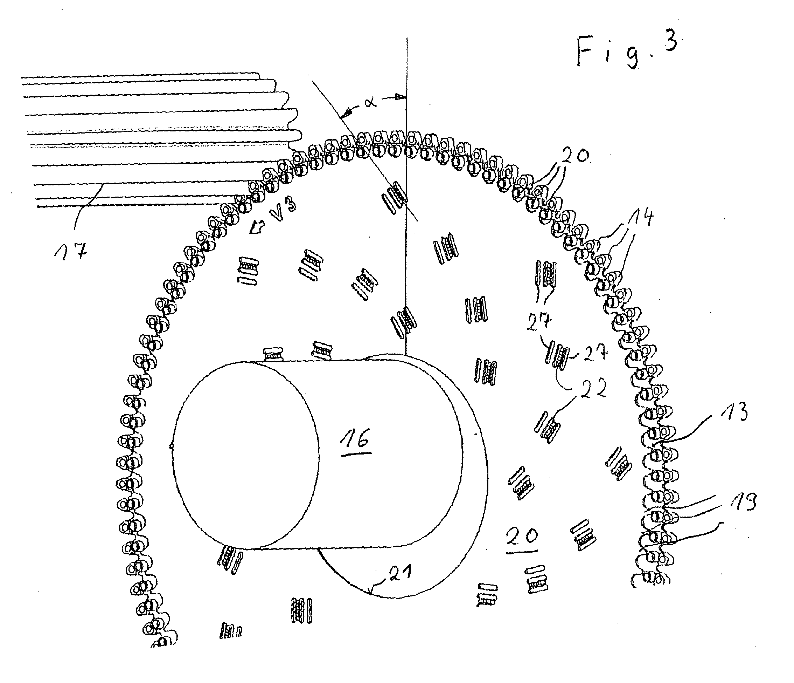

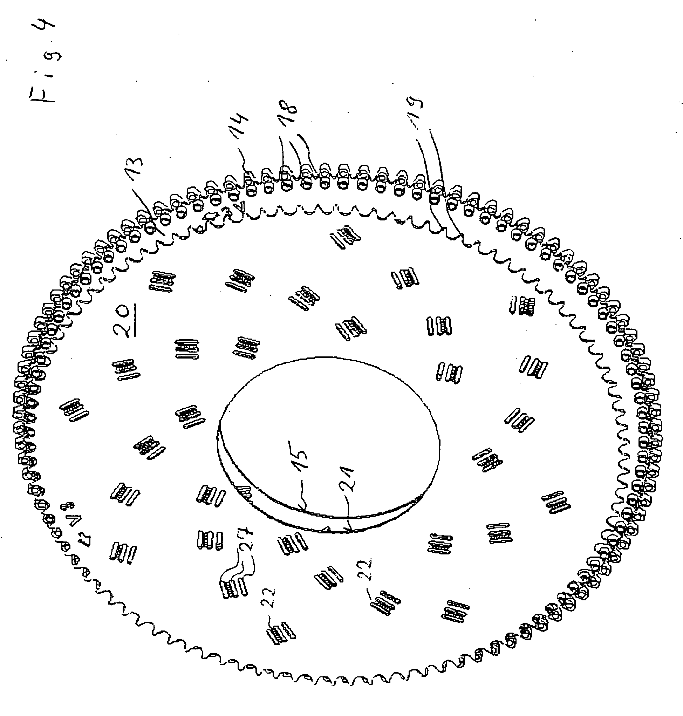

Realisiert wird ein solcher Bewegungsablauf beispielsweise durch die anhand von Fig. 3 schematisch dargestellte Anordnung. Diese weist eine ringförmige, im Wesentlichen flache Scheibe 13 auf, welche an ihrer Stirnseite mit einer Außenverzahnung 14 versehen ist. Die Scheibe 13 weist eine zentrale Innenausnehmung 15 (Fig. 4) auf, welche von einem Lagerzapfen 16 durchsetzt ist, auf dem die Scheibe 13 drehbar gelagert und abgestützt ist. Der Lagerzapfen 16 weist einen kleineren Durchmesser als die Innenausnehmung 15 auf, so dass die Lagerung der Scheibe 13 exzentrisch ist.

Angetrieben wird die Scheibe 13 über ein Antriebsritzell 17, das ebenfalls eine Stirnverzahnung aufweist, die mit der Außenverzahnung 14 im Antriebseingriff steht. Das Antriebsritzel 17 bildet gleichzeitig das Gegenlager zum Lagerzapfen 16, so dass bei Rotation des Antriebsritzels 17 die Scheibe um die Achse des Lagerzapfens 16 gedreht wird.

Die Scheibe 13 weist zu einer Seite nahe dem Außenumfang seitlich vorspringende Zähne 18 auf, die mit einer Außenverzahnung 19 einer parallel und mit Abstand dazu angeordneten Scheibe 20 kleineren Durchmessers im Antriebseingriff steht. Die Scheibe 20 ist ebenso wie die Scheibe 13 kreisrund und weist eine koaxial angeordnete kreisrunde Innenausnehmung 21 auf, die die gleiche Größe wie Innenausnehmung 15 der Scheibe 13 hat. Diese Innenausnehmung 21 ist ebenfalls vom Lagerzapfen 16 durchsetzt, so dass die Scheibe 20 zwischen dem Eingriff ihrer Außenverzahnung 19 mit den Zähnen 18 und dem Lagerzapfen 16 drehbeweglich gelagert ist. Auch die Lagerung der Scheibe 20 ist exzentrisch.

Der Antriebseingriff zwischen der durch die Zähne 18 gebildeten Innenverzahnung der Scheibe 13 und der Außenverzahnung 19 der Scheibe 20 besteht nur im Bereich gegenüber der Lagerzapfenauflage, also etwa dort, wo das Antriebsritzel 17 in die Außenverzahnung 14 der Scheibe 13 eingreift. Da der Außendurchmesser der Scheibe 20 deutlich kleiner als die durch die Zähne 18 gebildete Innenverzahnung ist, kann die Scheibe 20 innerhalb dieser Innenverzahnung abrollen.

Beide Scheiben 13 und 20 sind ringförmig ausgebildet und werden, da die Zähnezahl 18 der Innenverzahnung der Scheibe 13 der Zähnezahl der Außenverzahnung 14 entspricht, mit gleicher Umfangsgeschwindigkeit V3 angetrieben. Da die Scheiben 13, 20 jedoch deutlich unterschiedlichen Durchmesser haben, ergeben sich unterschiedliche Drehgeschwindigkeiten, so dass eine rotatorische Relativbewegung zwischen den Scheiben 13, 20 entsteht. Da die Scheiben darüber hinaus exzentrisch gelagert sind, ist die Relativbewegung der Scheiben zueinander nicht nur rotatorisch, sondern auch translatorisch.

Die Zähnezahl der Außenverzahnung 14 bzw. der Innenverzahnung 18 beträgt 103 Zähne, wohingegen die Außenverzahnung 19 der Scheibe 20 nur 101 Zähne aufweist. Es handelt sich bei beiden Zahlen um Primzahlen, weshalb eine übereinstimmende Wiederkehr der Lage der Scheiben 13 und 20 zueinander, wenn man beispielsweise zwei Punkte auf den Scheiben betrachtet, erst nach 10.403 Umdrehungen erfolgt.

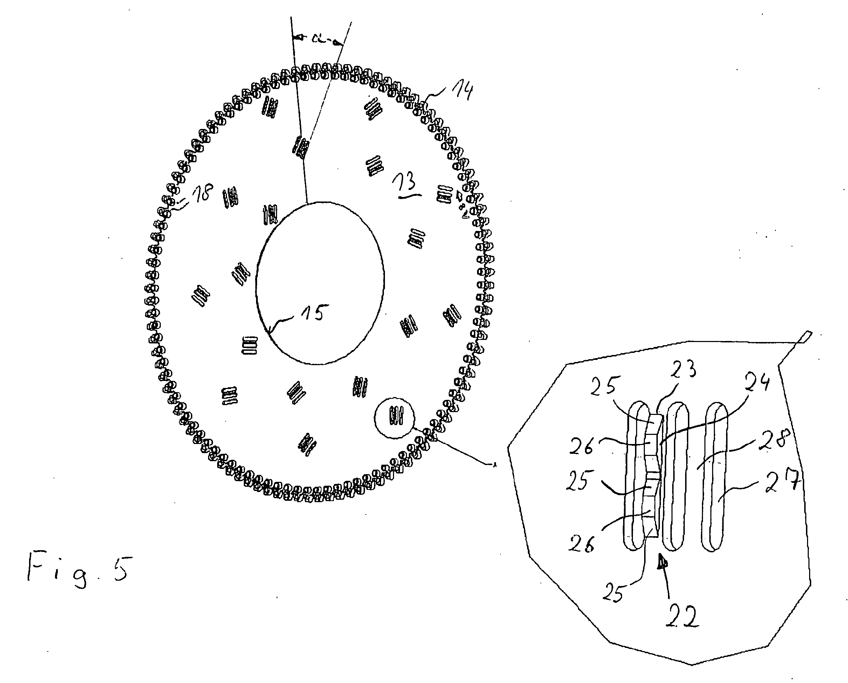

Auf jeder Scheibe 13 und 20 sind zu beiden Seiten Abstreifer 22 angeordnet, die sich von der Scheibe senkrecht nach oben erstrecken und welche eine Schmalseite 23 und eine Breitseite 24 aufweisen. Es sind jeweils zwei Abstreifer 22 mit ihren Schmalseiten aneinanderstoßend nebeneinander angeordnet und in einem Winkel von etwa 45° zur Radialen angeordnet. Jeder Abstreifer 22 weist zu seinen Schmalseitenenden Schrägflächen 25 auf, die sich im Wesentlichen aus dem Grundmaterial der jeweiligen Scheibe 13, 20 bis zur vollen Höhe des Abstreifers 22 erstrecken. Die volle Höhe weist ein Abstreifer 22 nur in einem mittleren Bereich 26 auf, wie aus der Einzelheit in Fig. 5 erkennbar ist.

Zur Breitseite 24 hin ist vor und hinter jedem Abstreifer eine die Länge des Abstreifers überragende Ausnehmung 27 etwa gleicher Breite innerhalb der jeweiligen Scheibe 13 bzw. 20 vorgesehen, so dass ein Paar nebeneinander angeordneter Abstreifer stets auf einem zwischen zwei Ausnehmungen 27 verbleibenden Stegbereich 28 angeordnet ist.

Die paarweise angeordneten Abstreifer 22 sind zu beiden Seiten jeder Scheibe 13 und 20 angeordnet, und zwar ist der auf der anderen Scheibenseite angeordnete Abstreifer etwa an gleicher Stelle, jedoch einem benachbartem Stegbereich 28 vorgesehen. Dies ist auch der Grund, weshalb stets drei Ausnehmungen 27 nebeneinander angeordnet sind, damit nämlich zunächst ein Abstreiferpaar 22 zu einer Seite auf dem ersten zwischen zwei Ausnehmungen 27 gebildeten Stegbereich 28 angeordnet werden kann und auf dem anderen dann ein Abstreiferpaar 22 auf der anderen Seite, (in der Zeichnung auf der Rückseite) angeordnet werden kann.

Zwar sind die Abstreifer einer Scheibe 13 stets im gleichen Winkel a von 30° bis 60°, hier 45° zur Radialen (Winkel a zwischen Breitseite eines Abstreifers und einer Radialen) angeordnet, und zwar zu beiden Seiten einer Scheibe, doch unterscheiden sich die Richtungen der Abstreifer 22 auf der großen Scheibe 13 von den auf der kleinen Scheibe 20, und zwar sind diese in einem Winkel von 90° zueinander angeordnet, wie dies beispielsweise bei einem ein Vergleich der Ausrichtung der Abstreifer in Fig. 4 und 5 verdeutlicht wird.

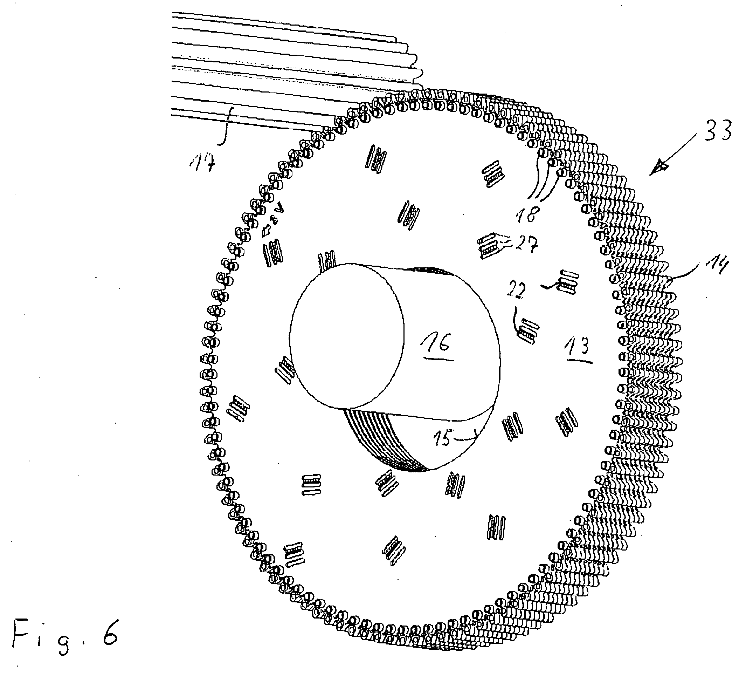

Die Scheiben 13 und 20 sind jeweils einstückig mit den Abstreifern 22 ausgebildet und als Kunststoffspritzgussteile hergestellt. Sie werden jeweils paarweise, also abwechselnd eine große Scheibe 13 mit darin liegender kleiner Scheibe 20 und sich daran anschließender großen Scheibe 13 mit wiederum darin liegender kleiner Scheibe 20 zu Stapeln 33 angeordnet, wie dies anhand von Fig. 6 verdeutlicht ist.

Der Abstand der Scheiben zueinander ist durch die Höhe der Abstreifer 22 bestimmt, und zwar durch ihre Höhe im mittleren Bereich 26. Bei aneinander liegenden Scheiben 13 und 20 (Fig. 6) liegen diese also in Achsrichtung des Lagerzapfens 16 lose aneinander an, sind jedoch im Übrigen mit ihren Innenausnehmungen 15 und 21 auf dem Lagerzapfen 16 gelagert und durch das gegenüberliegende Antriebsritzel 17 eingespannt und antriebsverbunden.

Da sich die Abstreifer 22 von jeder Scheibe zur benachbarten und umgekehrt erstrecken, kann es zu Kollisionen zwischen Abstreifern 22 benachbarter Scheiben 13, 20 kommen. Da die Abstreifer 22 der Scheiben 13 und die der Scheiben 20 um 90° versetzt zueinander angeordnet sind, treffen im Falle einer Kollision stets ein Abstreifer 22 mit seiner Breitseite 24 auf einen Abstreifer 22 mit seiner Schmalseite 23 einer gegenüberliegenden Scheibe. Damit hier nicht eine schlagartige Krafteinleitung und Beschädigung eines Abstreifers 22 erfolgt, sind die Schrägflächen 25 vorgesehen, welche dafür sorgen, dass der Abstreifer 22 mit seiner Schmalseite 23 den gegenüberliegenden Abstreifer 22 auf seiner Breitseite 24 elastisch verdrängt. Hierzu sind die Stegbereiche 28 nützlich, da sie aufgrund der gezielten Materialschwächung ermöglichen, dass der Abstreifer 22 auch im Bereich der Scheibe selbst, also in diesem Stegbereich ausweichen kann. Die Abstreifer 22 gegenüberliegender Scheiben 13 und 20 können somit elastisch ausweichen, bestimmen jedoch andererseits den Abstand der Scheiben, liegend also mit ihren mittleren Bereichen 26 voller Höhe an der gegenüberliegenden Scheibe an, wo sie für einen Materialabtrag bis auf den Scheibegrund sorgen.

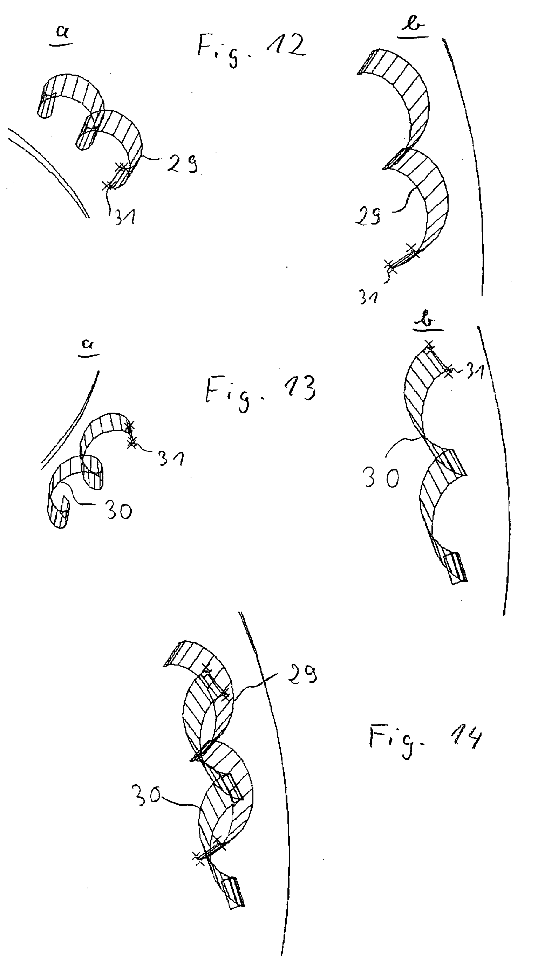

Dadurch, dass die Scheiben 13 und 20 sowohl eine rotatorische als auch eine translatorische Bewegung vollziehen, überstreicht jeder Abstreifer 22 auf der gegenüberliegenden Scheibenseite eine epizykloide oder hypozykloide Bahn. Diese Bahnen sind anhand der Fig. 12 bis 14 näher dargestellt.

Und zwar erzeugen die auf der kleinen Scheibe 20 angeordneten Abstreifer 22 auf der großen Scheibe epizykloide Bahnen 29, wie Fig. 12 a und b zeigen, je nach radialer Anordnung unterschiedlicher Wellenlänge. Die Abstreifer 22 auf der großen Scheibe 13 erzeugen auf der kleinen Scheibe 20 hypozykloide Bahnen 30, wie sie in Fig. 13 dargestellt sind und zwar auch hier in ihrer Wellenlänge abhängig von der radialen Anordnung des jeweiligen Abstreifers.

Bei den epizykloiden Bahnen 29 macht der Abstreifer 22 von einem Startpunkt 31 aus zunächst eine rückführende Bahn, auf der er im Wesentlichen mit seiner Schmalseite 23 bewegt wird. Wenn er dann den maximalen Radius der Scheibe, die er gerade überstreicht, erreicht hat, schiebt er Material im Wesentlichen mit seiner Breitseite 24 radial nach innen bevor er wieder eine rückführende Bahn mit seiner Schmalseite 23 vollzieht.

Bei den hypozykloiden Bahnen 30 ist der Bewegungsablauf im Wesentlichen umgekehrt, d. h. es erfolgt zunächst eine im Wesentlichen radiale Bewegung mit der Breitseite 24, bei der das Material auf einen inneren Radius geschoben wird, wonach eine Rückführbahn mit der Schmalseite 23 wieder auf den äußeren Radius führt. Die Abstreifer 22 sind auf den Scheiben 13 und 20 so angeordnet, dass die epizykloiden bzw. hypozykloiden Bahnen 29 und 30 radial überlappen, so dass der Materialtransport, der von einem Abstreifer radial nach innen erfolgt ist, von einem weiter innen liegenden Abstreifer weiter nach innen geschoben wird. Da sämtliche Bahnen umlaufend sind, erfolgt also im Laufe der Zeit ein vollständiger Materialabtrag, wobei aufgrund dessen, das stets nur abschnittsweise Material abgetragen wird, sichergestellt ist, dass einerseits ein genügender Strömungsquerschnitt zwischen benachbarten Scheiben 13 zur Durchdringung des Fluids gegeben ist und andererseits genügend Material an den Scheiben 13, 20 angelagert ist, um eine ausreichende Behandlung des Fluids zu gewährleisten. Die Durchströmung erfolgt im dargestellten Ausführungsbeispiel von außen nach innen, kann jedoch auch in umgekehrter Richtung erfolgen. Es ergänzen sich die Transportfunktionen der Abstreifer und der Fluidströmung in dem eine Verdünnung durch das Fluid und eine Durchmischung durch die Abstreifer erfolgt. In Fig. 14 ist verdeutlicht, welche Bahnen Abstreifer gegenüber liegender Scheiben vollziehen, diese Darstellung verdeutlicht auch, dass die Abstreifer 22 stets im 90° Winkel aufeinander treffen, wenn sie kollidieren.

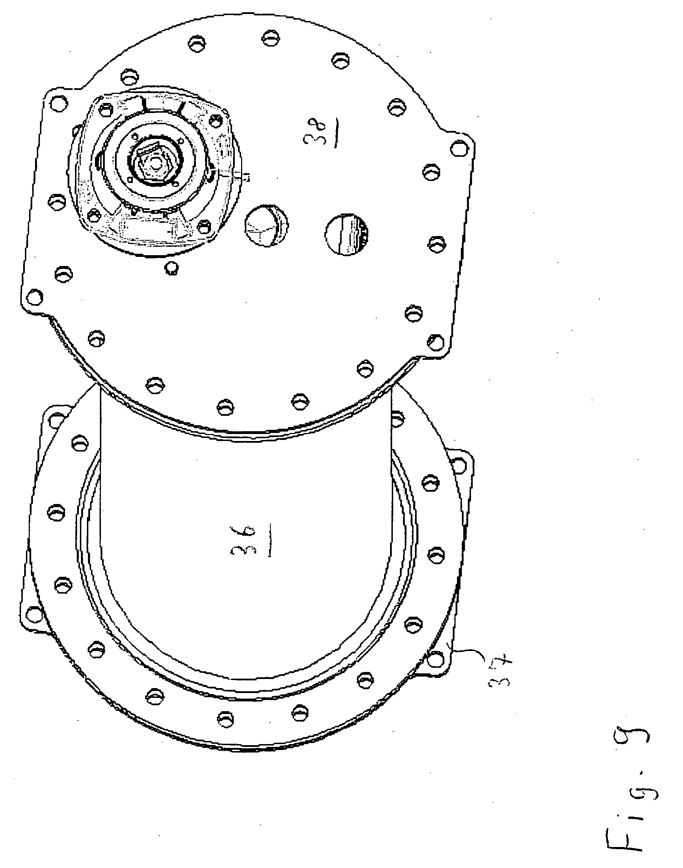

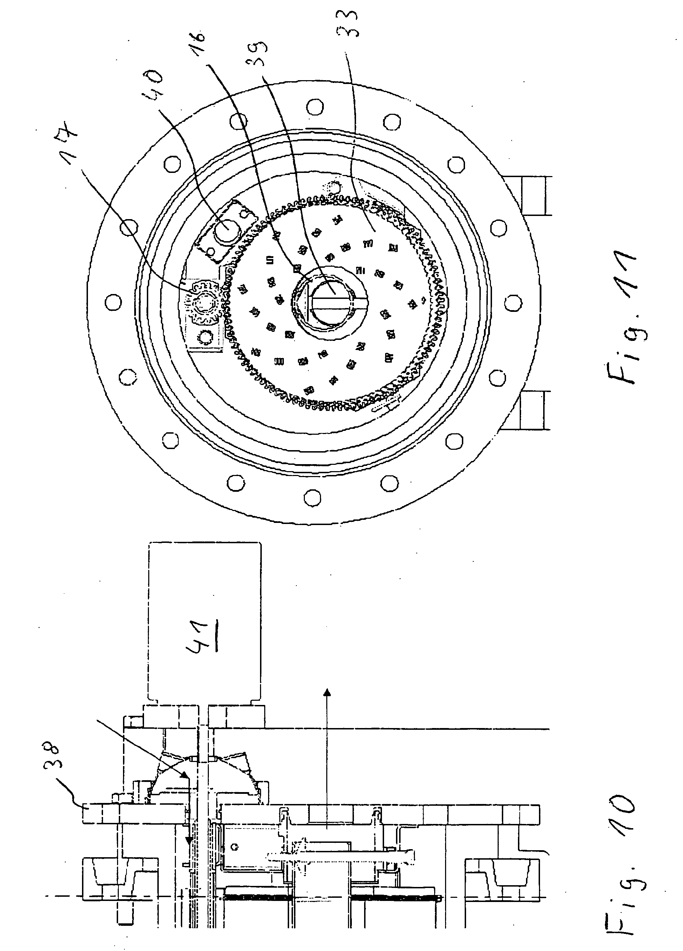

Der anhand von Fig. 6 schematisch dargestellte Scheibenstapel 33 mit Lagerzapfen 16 und Antriebsritzel 17 kann beispielsweise in einen anhand der Fig. 9 bis 11 dargestellten Reaktor 35 integriert werden. Der Reaktor weist ein im Wesentlichen zylindrisches Gehäuse 36 auf, das durch zwei angeflanschte Deckel 37, 38 stirnseitig abgeschlossen ist. Der in Fig. 9 vordere Deckel 38 weist eine Fluidseintrittsöffnung 39 sowie eine zentrale Fluidaustrittsöffnung 40 auf. Innerhalb des zylindrischen Gehäuses 36 ist ein Scheibenstapel entsprechend Fig. 6 angeordnet, der auf dem Zapfen 16 drehbar gelagert ist. Das Antriebsritzel 17 erstreckt sich wie der Scheibenstapel 33 über nahezu die gesamte Länge des zylindrischen Gehäuses 36, mit dem er im Eingriff steht. Die das Ritzel 17 tragende Welle ist durch den vorderen Deckel 38 dichtend herausgeführt, wo ein Antriebsmotor 41 angeflanscht ist.

Die zu behandelnde Flüssigkeit gelangt durch die Fluidseintrittsöffnung 39 im Deckel 38 in das zylindrische Gehäuse 36 strömt von dort von außen nach innen durch den Scheibenstapel 33 längs der durch die Abstreifer geschaffenen Kanäle und wird über den zwischen dem Zapfen 16 und dem Innenausnehmungen 15 und 21 des Scheibenstapels 33 gebildeten Freiraum und die Fluidaustrittsöffnung 40 wieder abgeführt. Zusammen mit dem zu behandelnden Fluid wird über die Fluidaustrittsöffnung 40 auch das abgetragene Material abgeführt.

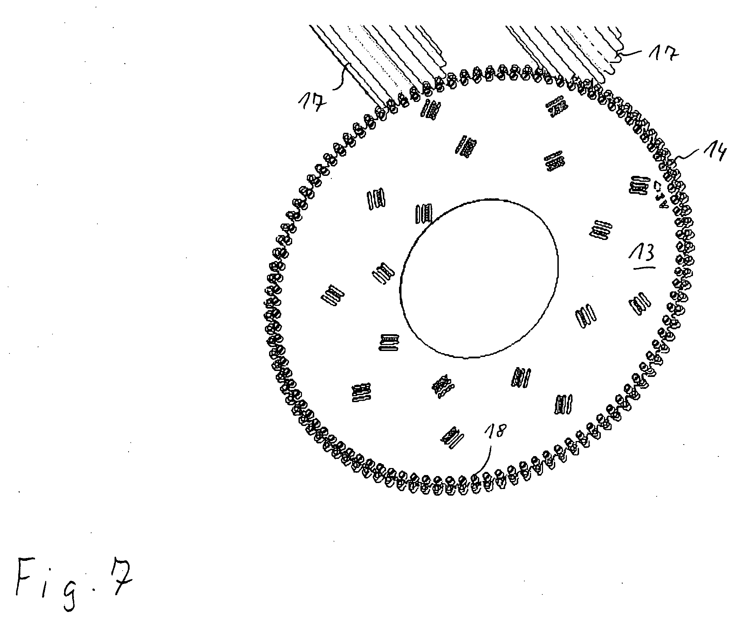

Bei dem vorbeschriebenen Ausführungsbeispiel erfolgt Antrieb und Lagerung des Scheibenstapels 23 über eine Zweipunktlagerung. Anhand von Fig. 7 ist dargestellt, wie eine Dreipunktlagerung erfolgen kann, in dem neben dem Antriebsritzel 17 ein weiteres angetriebenes oder ggf. nur mitlaufendes Ritzel 42 vorgesehen ist, das ebenfalls stirnverzahnt und mit dem Scheibenstapel in Eingriff steht. Alle vorgenannten Bauteile können vorteilhaft aus Kunststoff hergestellt sein, insbesondere finden solche Kunststoffe Verwendung, die schon in der Abwassertechnik erprobt sind.

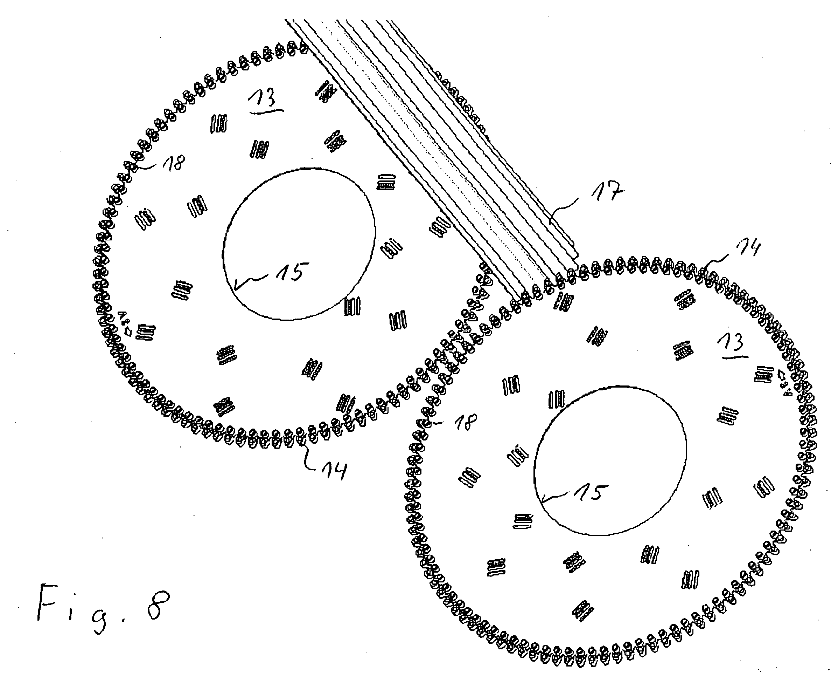

Anhand von Fig. 8 ist dargestellt, wie mehrere Scheibenstapel 33 miteinander antriebsverbunden sein können. Die Scheibenstapel 33 in Fig. 8 sind mit Abstand zueinander angeordnet, stehen jedoch beide mit dem Antriebsritzel 17 formschlüssig in Eingriff, so dass sie bewegungsgekuppelt sind. Es können also mit einem Antriebsritzel 17 auch zwei Scheibenstapel 33 angetrieben werden, es versteht sich, dass das Reaktorgehäuse entsprechend anzupassen ist. Es können praktisch beliebig viele Scheibenstapel nebeneinander angeordnet und drehverbunden werden, auch kann die Länge der Scheibenstapel variiert werden, ohne die Grundbauelemente, nämlich die Scheiben 13 und 20 baulich verändern zu müssen.

### Bezugszeichenliste

- 1: ebene Fläche
- 2: Scheibe
- 3: gekrümmte Fläche
- 4: Zylinder
- 5: Abstreifer/Schieber
- 5': Schieber
- 6: Drehrichtung
- 7: Richtung
- 8: Radius
- 9: Radius
- 10: Kurve
- 11: Kurve
- 12: Bahnverläufe
- 13: Scheibe (groß)
- 14: Außenverzahnung
- 15: Innenausnehmung
- 16: Lagerzapfen
- 17: Antriebsritzel
- 18: Zähne
- 19: Außenverzahnung
- 20: Scheibe (klein)
- 21: Innenausnehmung
- 22: Abstreifer
- 23: Schmalseite
- 24: Breitseite
- 25: Schrägfläche
- 26: mittlerer Bereich voller Höhe
- 27: Ausnehmung
- 28: Stegbereich
- 29: epizykloide Bahnen
- 30: hypozykloide Bahnen
- 31: Startpunkt
- 33: Scheibenstapel
- 35: Reaktor
- 36: zylindrisches Gehäuse
- 37: hinterer Deckel
- 38: vorderer Deckel
- 39: Fluideintrittsöffnung
- 40: Fluidaustrittsöffnung
- 41: Motor
- 42: Ritzel

## Patentansprüche

1. Vorrichtung zur Fluidbehandlung insbesondere Abwasserbehandlung, bei der das Fluid längs einer oder durch mindestens eine mit Material behaftete Fläche geführt wird und bei der mindestens eis Abstreiforgan (22) vorgesehen ist, welches eine Schmalseite (23) und eine Breitseite (24) aufweist und die Fläche bahnweise überstreicht, wobei der Bahnveriauf (29, 30) so gewählt ist dass die behaftete Fläche abschnittsweise nacheinander überstrichen wird, **dadurch gekennzeichnet, dass** das Abstreiforgane (22) auf Bähnabschnitten derart geführt ist, dass es abwechselnd auf einem Bahnabschnitt in einer ersten Richtung im Wesentlichen mit seiner Breitseite (24) abstreift, und dann auf einen Bahnabschnitt in einer zweiten Richtung im Wesentlichen mit seiner Schmalseite (23) bewegt wird.

2. Vorrichtung nach Anspruch 1, **dadurch gekennzeichnet, dass** mehrere Abstreiforgane vorgesehen sind, die unterschiedliche Bahnabschnitte überstreichen.

3. Vorrichtung nach einem der vorhergehenden Ansprüche, **dadurch gekennzeichnet, dass** die materiafbehaftete fläche die Filteroberfläche eines Filters bildet und das Abstreiforgan zur Entfernung von Sedimenten vorgesehen ist.

4. Vorrichtung nach einem der vorhergehenden Ansprüche, **dadurch gekennzeichnet, dass** die materialbehaftete Fläche die Mantelfläche eines Zylinders (4) ist und die Breitseite, der Abstreiforgane (5) im Wesentlichen parallel zur Zylinderachse verläuft.

5. vorrichtung nach einem der vorhergehenden Ansprüche, **dadurch gekennzeichnet, dass** die materiatbehaftete Fläche durch relativ zueinander bewegbare Seiten von Scheiben (13, 20) gebildet wird, wobei einer, vorzugsweise jeder Scheibenseite mindestens ein Abstreiforgan (22) zugeordnet ist.

6. Vorrichtung nach einem der vorhergehenden Ansprüche, **dadurch gekennzeichnet, dass** die Scheiben (13, 20) parallel zueinander und mit Abstand angeordnet sind und die Abstreiforgane (22) zwischen benachbarten Scheiben (13, 20) wirksam sind.

7. Vorrichtung nach einem der vorhergehenden Ansprüche, **dadurch gekennzeichnet, dass** die Abstreiforgane durch sich im Wesentlichen senkrecht von einer Scheibe (13, 20) in Richtung auf die gegenüberliegende Scheibe (20, 13) erstreckende Abstreifer (22) gebildet sind.

8. Vorrichtung nach einem der vorhergehenden Ansprüche, **dadurch gekennzeichnet, dass** benachbarte Scheiben (13, 20) zueinander rotatorisch und translatorisch bewegt angetrieben sind

9. Vorrichtung nach einem der vorhergehenden Ansprüche, **dadurch gekennzeichnet, dass** die Scheiben (13, 20) parallel zueinander angeordnet sind und die Bewegung der Scheiben (13, 20) zueinander in Ebenen parallel zu den Scheiben (13, 20) erfolgt.

10. Vorrichtung nach einem der vorhergehenden Ansprüche, **dadurch gekennzeichnet, dass** benachbarte Scheiben (13, 20) derart zueinander bewegt werden, dass ein Abstreiforgan (22) auf der gegenüberliegenden Scheibe mit seiner Breitseite, (24), eine im Wesentlichen radiale Arbeitsbahn beschreibt und nachfolgend mit seiner Schmalseite eine Rückführbahn ausfährt oder umgekehrt, wobei der Anfang der Rückführbahn und das Ende der Arbeitsbahn auf dem selben Scheibenradius liegen und umgekehrt.

11. Vorrichtung nach einem der vorhergehenden Ansprüche **dadurch gekennzeichnet, dass** ein Abstreiforgan (22) auf einer hypozykloiden oder epizykloiden Bahn (30, 29) über die Scheibe (13, 20) geführt ist.

12. Vorrichtung nach einem der vorhergehenden Ansprüche, **dadurch gekennzeichnet, dass** Abstreiforgane (22) einer Scheibe e-pizykloide Bahnen (29) und Abstreiforgane der benachbarten Scheibe hypozykloide Bahnen (30) beschreiben

13. Vorrichtung nach einem der vorhergehenden Ansprüche, **dadurch gekennzeichnet, dass** mehrere Abstreiforgane (22) auf hypozykloiden bzw, epizykloiden Bahnen (30, 29) aüf unterschiedlichen Radien über die Scheibe (13, 20) geführt sind, derart, dass die hypozykloiden bzw. epizykloiden Bahnen (30, 29) in aneinander anschließenden oder Überlappenden Ringabschnitte verlaufen, derart, dass ein Materialtransport von einem Scheibendurchmesser zu einem anderen Scheibendurchmesser, vorzugsweise von außen nach innen erfolgt.

14. Vorrichtung nach einem der vorhergehenden Ansprüche, **dadurch gekennzeichnet, dass** die Scheiben (13, 20) durch mindestens zwei Scheibenstapel (33) gebildet sind, die so ungeordnet sind, dass eine Scheibe (13) des einen Stapels mindestens zu einer Scheibe (20) des anderen Stapels benachbart ist, wobei zwischen diesen benachbarten Scheiben der Scheibenstapel ein zu behandelndes Fluid geführt ist.

15. Vorrichtung nach einem der vorhergehenden, Ansprüche, **dadurch gekennzeichnet, dass** benachbarte Scheiben (13, 20), bzw. Scheibenstapel gleichsinnig jedoch mit unterschiedlicher Drehgeschwindigkeit angetrieben sind.

16. Vorrichtung nach einem der vorhergehenden Ansprüche, **dadurch gekennzeichnet, dass** die Scheiben (13, 20) ringförmig ausgebildet sind und das Fluid durch einen durch die, zentralen Ausnehmungen (15, 21) in den Scheiben (13, 20) gebildeten zentralen Kanal und zwischen den Scheiben strömt.

17. Vorrichtung nach einem der vorhergehenden Ansprüche, **dadurch gekennzeichnet, dass** benachbart zueinander liegende Scheiben (13, 20) exzentrisch zueinander gelagert und angetheben sind.

18. Vorrichtung nach einem der vorhergehenden Ansprüche, **dadurch gekennzeichnet, dass** die Scheiben, (13. 20) der ineinandergreifenden Scheibenstapel ringförmig ausgebildet sind, unterschiedliche Außendurchmesser bei vorzugsweise gietcher rädidler Ringbreite aufweisen, drehbar gelagert sind und im, wesentlichen mit gleicher Umfangsgeschwindigkeit angetrieben sind.

19. Vorrichtung nach einem der vorhergehenden Ansprüche, **dadurch gekennzeichnet, dass** die Scheiben (13, 20) mindestens eines Stapels eine stirnseitige Außenverzahnung aufweisen.

20. Vorrichtung nach einem der vorhergehenden Ansprüche, **dadurch gekennzeichnet, dass** mindestens eine Scheibe (13) eines Stapels nahe der Außenverzahnung (14) an einem vorspringenden Bereich eine stirnseitige Innenverzahnung (18) aufweist, mit der die Außenverzahnung (19) mindestens einer Scheibe (20) des anderen Scheibenstapels kämmt.

21. Vorrichtung nach einem der vorhergehenden Ansprüche, **dadurch gekennzeichnet dass** alle Scheiben (13, 20) eine verzahnung (14, 19) aufweisen und angetrieben sind.

22. Vorrichtung nach einem der vorhergehenden Ansprüche, **dadurch gekennzeichnet, dass** die Außenverzahnung (14) der Scheiben (13) mit zwei zueinander winkelversetzten Antriebsrädern (17) antriebsverbunden ist.

23. Vorrichtung nach einem der vorhergehende Ansprüche, **dadurch gekennzeichnet, dass** die Scheiben (13, 20) am Innenumfang drehbar abgestützt sind, vorzugsweise gegenüberliegend zum Antriebseingriff.

24. Vorrichtung nach einem der vorhergehenden Ansprüche **dadurch gekennzeichnet, dass** die Abstreifer (22) so angeordnet sind, dass sie mit ihrer Breitseite (24) und einer Radialen einen im Weseitlichen konstanten Winkel (α) von vorzugsweise 30° bis 60° einschließen.

25. Vorrichtung nach einem der vorergehenden Ansprüche **dadurch gekennzeichnet, dass** die Abstreifer (22) benachbarter Scheiben (13, 20) um 90° zueinander versetzt ausgebildet sind.

26. Vorrichtung nach einem der vorhergehenden Ansprüche, **dadurch gekennzeichnet, dass** vor und/oder hinter den Abstreifern (22) Durchbrechungen (27) in der Scheibe (13, 20) vorgesehen sind.

27. Vorrichtung nach einem der vorhergehenden Ansprüche, **dadurch gekennzeichnet, dass** die Höhen der Abstreifer (22) den Abstand benachbarter Scheiben (3, 20) bestimmen.

28. Vorrichtung nach einem der vorhergehend en Ansprüche, **dadurch gekennzeichnet, dass** die Abstreifer (22) auf ihrer in Bewegungsrichtung frontseitigen Schmalseite (23) abgeschrägt ausgebildet sind.

29. Vorrichtung nach einem der vorhergehenden Ansprüche, **dadurch gekennzeichnet, dass** eine Scheibe (13, 20) mit den daran ausgebildeten Abstreifern (22) und den Antriebsverzahhungen (14, 18, 19) einstückig als Kunststoffspritzgussteli ausgebildet ist und vorzugsweise aus Polyethylen oder Polypropylen hergestellt ist.

30. Vorrichtung nach einem der vorhergehenden Anspruche, **dadurch gekennzeichnet, dass** die Scheiben (13, 20) mit den abstreiforganen (22) Teil eines biologischen Abwasserbehahdiungsreaktors (35) bilden, wobei die Abstreiforgane (22) den biologischen Materialzuwachs entfernen.

31. Vorrichtung nach einem der vorhergehenden Ansprüche, **dadurch gekennzeichnet, dass** die Scheiben mit deh Abstreiforganen Teil eines chemischen Reaktors bilden, wobei die Abstreiforgane zumindest Teile eines chemischen Reaktionsproduktes entfernen.

32. Vorrichtung nach einem der vorhergehenden Ansprüche, **dadurch gekennzeichnet, dass** die Scheiben Vertiefungen in Form von Kanälen, Strukturen oder Oberflächenrauhigkeiten aufweisen.

33. Vorrichtung nach einem der vorhergehenden Anspruche, **dadurch gekennzeichnet, dass** die Getriebemittel (17) für den Bewegungsablauf der Abstreiforgane (22) innerhalb des Reaktors angeordnet sind und dass die Antriebsmittel vorzugsweise außerhalb des Reaktors liegen.

34. Vorrichtung nach einem der vorhergehenden Ansprüche, **dadurch gekennzeichnet, dass** die Getriebe- und Anffiebsrnittel (41) für den Bewegungsablauf der Abstreiforgane außerhalb des Reaktors angeordnet sind.

35. Vorrichtung nach einem der vorhergehenden Ansprüche; , **dadurch gekennzeichnet, dass** ein Scheibenstapel stationär innerhalb des Reaktors angeordnet ist und der andere angetrieben ist,

## Claims

1. A device for fluid treatment, in particular for waste-water treatment, with which the fluid is led along or through at least one surface coated with material, and with which at least one wiper element (22) is provided, which has a narrow side (23) and a wide side (24) and brushes over the surface in a lane-like manner, wherein the lane course (29, 30) is selected such that the coated surface is brushed over successively in sections, **characterised in that** the wiper element (22) is led on lane sections in a manner such that it alternately wipes on a lane section in a first direction essentially with its wide side (24), and then on a lane section in a second direction essentially with its narrow side (23).

2. A device according to claim 1, **characterised in that** several wiper elements are provided, which brush over different lane sections.

3. A device according to one of the preceding claims, **characterised in that** the surface coated with material forms the filter surface of a filter, and the wiper element is provided for removing sediments.

4. A device according to one of the preceding claims, **characterised in that** the surface coated with material is the lateral surface of a cylinder (4), and the wide side of the wiper elements (5) runs essentially parallel to the cylinder axis.

5. A device according to one of the preceding claims, **characterised in that** the surface coated with material is formed by sides of disks (13, 20) which are movable relative to one another, wherein at least one wiper element (22) is assigned to one, preferably to each disk side.

6. A device according to one of the preceding claims, **characterised in that** the disks (13, 20) are arranged parallel to one another and at a distance, and the wiper elements (22) are effective between adjacent disks (13, 20).

7. A device according to one of the preceding claims, **characterised in that** the wiper elements are formed by wipers (22) which extend essentially perpendicularly from one disk (13, 20) in the direction of the opposite disk (20, 13).

8. A device according to one of the preceding claims, **characterised in that** adjacent disks (13, 20) are driven moved rotationally or translatorily to one another.

9. A device according to one of the preceding claims, **characterised in that** the disks (13, 20) are arranged parallel to one another, and the movement of the disks (13, 20) to one another is effected in planes parallel to the disks (13, 20).

10. A device according to one of the preceding claims, **characterised in that** adjacent disks (13, 20) are moved to one another in a manner such that a wiper element (22) on the opposite disk with its wide side (24) describes an essentially radial working lane, and subsequently with its narrow side executes a return lane, or vice versa, wherein the beginning of the return lane and the end of the working lane lie on the same disk radius, and vice versa.

11. A device according to one of the preceding claims, **characterised in that** a wiper element (22) is guided on a hypocycloidal lane or epicycloidal lane (30, 29), over the disk (13, 20).

12. A device according to one of the preceding claims, **characterised in that** wiper elements (22) of one disk describe epicycloidal lanes (29), and wiper elements of the adjacent disk describe hypocycloidal lanes (30).

13. A device according to one of the preceding claims, **characterised in that** several wiper elements (22) are led on hypocycloidal or epicycloidal lanes (30, 29) on different radii over the disk (13, 20), in a manner such that the hypocycloidal or epicycloidal lanes (30, 29) run in annular sections which connect to one another or overlap one another, in a manner such that a material transport from one disk diameter to another disk diameter is preferably effected from the outside to the inside.

14. A device according to one of the preceding claims, **characterised in that** the disks (13, 20) are formed by at least two disk stacks (33) which are arranged such that one disk (13) of the one stack is adjacent at least to one disk (20) of the other stack, wherein a fluid to be treated is guided between these adjacent disks of the disk stack.

15. A device according to one of the preceding claims, **characterised in that** adjacent disks (13, 20) or disk stacks are driven in the same direction but at a different rotational speed.

16. A device according to one of the preceding claims, **characterised in that** the disks (13, 20) are designed in an annular manner and that the fluid flows through a central channel formed by the central recesses (15, 21) in the disks (13, 20), and between the disks.

17. A device according to one of the preceding claims, **characterised in that** disks (13, 20) lying adjacent to one another are mounted and driven eccentrically to one another.

18. A device according to one of the preceding claims, **characterised in that** the disks (13, 20) of the disk stacks engaging into one another are formed in an annular manner, have different outer diameters with preferably the same radial annular width, are rotatably mounted and are essentially driven at the same peripheral speed.

19. A device according to one of the preceding claims, **characterised in that** the disks (13, 20) of at least one stack have an end-side outer toothing.

20. A device according to one of the preceding claims, **characterised in that** at least one disk (13) of a stack close to the outer toothing (14) on a projecting region comprises an end-side inner toothing (18), with which the outer toothing (19) of at least one disk (20) of the other disk stack meshes.

21. A device according to one of the preceding claims, **characterised in that** all disks (13, 20) comprise a toothing (14, 19) and are driven.

22. A device according to one of the preceding claims, **characterised in that** the outer toothing (14) of the disks (13) is drivingly connected to two drive wheels (17) angularly offset to one another.

23. A device according to one of the preceding claims, **characterised in that** the disks (13, 20) are rotatably supported on the inner periphery, preferably in an oppositely lying manner, for drive engagement.

24. A device according to one of the preceding claims, **characterised in that** the wipers (22) are arranged such that with their wide side (24) and a radial, they enclose essentially a constant angle (α) of preferably 30° to 60°.

25. A device according to one of the preceding claims, **characterised in that** the wipers (22) of adjacent disks (13, 20) are designed offset by 90° to one another.

26. A device according to one of the preceding claims, **characterised in that** openings (27) are provided in the disk (13, 20) in front of and/or behind the wipers (22).

27. A device according to one of the preceding claims, **characterised in that** the heights of the wipers (22) determine the distance of adjacent disks (13, 20).

28. A device according to one of the preceding claims, **characterised in that** the wipers (22) on their narrow side (23) which is on the front side in the movement direction, are designed in a bevelled manner.

29. A device according to one of the preceding claims, **characterised in that** a disk (13, 20) with the wipers (22) formed thereon and with the drive toothings (14, 18, 19), is designed as one piece as a plastic injection moulded part, and is preferably manufactured of polyethylene or polypropylene.

30. A device according to one of the preceding claims, **characterised in that** the disks (13, 20) with the wiper elements (22) form part of a biological waste-water treatment reactor (35), wherein the wiper elements (22) remove the biological material growth.

31. A device according to one of the preceding claims, **characterised in that** the disks with the wiper elements form part of a chemical reactor, wherein the wiper elements remove at least parts of a chemical reaction product.

32. A device according to one of the preceding claims, **characterised in that** the disks comprise recesses in the form of channels, structures or surface roughness.

33. A device according to one of the preceding claims, **characterised in that** the gear means (17) for the movement course of the wiper elements (22) are arranged within the reactor, and that the drive means preferably lie outside the reactor.

34. A device according to one of the preceding claims, **characterised in that** the gear and drive means (41), for the movement course of the wiper elements, are arranged outside the reactor.

35. A device according to one of the preceding claims, **characterised in that** one disk stack is arranged within the reactor in a stationary manner, and the other is driven.

## Revendications

1. Dispositif de traitement de fluides, en particulier de traitement d'eaux usées, dans lequel le fluide est guidé le long de ou à travers au moins une surface à laquelle adhère du matériau, et dans lequel est prévu au moins un organe de raclage (22) qui présente un côté étroit (23) et un côté large (24) et balaye la surface selon des trajectoires, le tracé (29, 30) des trajectoires étant choisi de telle sorte que la surface couverte de matériau soit balayée successivement par portions, **caractérisé en ce que** l'organe de raclage (22) est guidé sur des portions de trajectoires de façon à, alternativement, racler sur une portion de trajectoire dans une première direction essentiellement avec son côté large (24) et ensuite être déplacé sur une portion de trajectoire dans une deuxième direction essentiellement avec son côté étroit (23).

2. Dispositif selon la revendication 1, **caractérisé en ce que** sont prévus plusieurs organes de raclage qui balayent différentes portions de trajectoires.

3. Dispositif selon l'une des revendications précédentes, **caractérisé en ce que** la surface recouverte de matériau forme la surface d'un filtre et **en ce que** l'organe de raclage est prévu pour éliminer des sédiments.

4. Dispositif selon l'une des revendications précédentes, **caractérisé en ce que** la surface recouverte de matériau est la surface d'enveloppe d'un cylindre (4) et **en ce que** le côté large des organes de raclage (5) est sensiblement parallèle à l'axe du cylindre.

5. Dispositif selon l'une des revendications précédentes, **caractérisé en ce que** la surface recouverte de matériau est formée par des faces de disques (13, 20) déplaçables l'une par rapport à l'autre, au moins un organe de raclage (22) étant associé à l'une, de préférence, à chaque face de disque.

6. Dispositif selon l'une des revendications précédentes, **caractérisé en ce que** les disques (13, 20) sont parallèles entre eux et espacés l'un de l'autre et **en ce que** les organes de raclage (22) agissent entre des disques adjacents (13, 20).

7. Dispositif selon l'une des revendications précédentes, **caractérisé en ce que** les organes de raclage sont formés par des racleurs (22) s'étendant de manière sensiblement perpendiculaire depuis un disque (13, 20) en direction du disque (20, 13) opposé.

8. Dispositif selon l'une des revendications précédentes, **caractérisé en ce que** des disques adjacents (13, 20) sont entraînés en rotation et en translation l'un par rapport à l'autre.

9. Dispositif selon l'une des revendications précédentes, **caractérisé en ce que** les disques (13, 20) sont disposés de manière parallèle entre eux et **en ce que** le mouvement des disques (13, 20) l'un par rapport à l'autre s'opère dans des plans parallèles aux disques (13, 20).

10. Dispositif selon l'une des revendications précédentes, **caractérisé en ce que** des disques adjacents (13, 20) sont déplacés l'un par rapport à l'autre de telle façon qu'un organe de raclage (22) sur le disque opposé décrit, avec son côté large (24), une trajectoire de travail sensiblement radiale et exécute ensuite, avec son côté étroit, une trajectoire de retour ou inversement, le début de la trajectoire de retour et la fin de la trajectoire de travail étant situés sur le même rayon du disque et inversement.

11. Dispositif selon l'une des revendications précédentes, **caractérisé en ce qu'**un organe de raclage (22) est guidé sur une trajectoire hypocycloïdale ou épicycloïdale (30, 29) à travers le disque (13, 20).

12. Dispositif selon l'une des revendications précédentes, **caractérisé en ce que** des organes de raclage (22) d'un disque décrivent des trajectoires épicycloïdales (29) et des organes de raclage du disque adjacent des trajectoires hypocycloïdales (30).

13. Dispositif selon l'une des revendications précédentes, **caractérisé en ce que** plusieurs organes de raclage (22) sont guidés sur des trajectoires hypocycloïdales ou épicycloïdales (30, 29) sur différents rayons à travers le disque (13, 20), de telle sorte que les trajectoires hypocycloïdales ou épicycloïdales (30, 29) ont la forme de portions annulaires adjacentes ou se chevauchant, et ce, de façon qu'un transport de matière s'opère d'un diamètre de disque à un autre diamètre de disque, de préférence de l'extérieur vers l'intérieur.

14. Dispositif selon l'une des revendications précédentes, **caractérisé en ce que** les disques (13, 20) sont constitués d'au moins deux empilages de disques (33) qui sont agencés de telle façon qu'un disque (13) d'un empilage est adjacent à au moins un disque (20) de l'autre empilage, un fluide à traiter étant guidé entre ces disques adjacents des empilages de disques.

15. Dispositif selon l'une des revendications précédentes, **caractérisé en ce que** des disques (13, 20) ou empilages de disques adjacents sont entraînés dans le même sens, cependant à une vitesse de rotation différente.

16. Dispositif selon l'une des revendications précédentes, **caractérisé en ce que** les disques (13, 20) sont de forme circulaire et **en ce que** le fluide s'écoule à travers un canal central, formé par les évidements centraux (15, 21) ménagés dans les disques (13, 20), et entre les disques.

17. Dispositif selon l'une des revendications précédentes, **caractérisé en ce que** des disques (13, 20) adjacents entre eux sont montés et entraînés de manière excentrique l'un par rapport à l'autre.

18. Dispositif selon l'une des revendications précédentes, **caractérisé en ce que** les disques (13, 20) des empilages de disques en prise mutuelle sont de forme circulaire, présentent des diamètres extérieurs différents pour une largeur circulaire radiale de préférence identique, sont montés à rotation et sont entraînés sensiblement à la même vitesse périphérique.

19. Dispositif selon l'une des revendications précédentes, **caractérisé en ce que** les disques (13, 20) d'au moins un empilage présentent une denture extérieure frontale.

20. Dispositif selon l'une des revendications précédentes, **caractérisé en ce qu'**au moins un disque (13) d'un empilage présente, à proximité de la denture extérieure (14), au niveau d'une région en saillie, une denture intérieure frontale (18) avec laquelle engrène la denture extérieure (19) d'au moins un disque (20) de l'autre empilage de disques.

21. Dispositif selon l'une des revendications précédentes, **caractérisé en ce que** tous les disques (13, 20) présentent une denture (14, 19) et sont entraînés.

22. Dispositif selon l'une des revendications précédentes, **caractérisé en ce que** la denture extérieure (14) des disques (13) est reliée par entraînement à deux pignons menants (17) décalés angulairement entre eux.

23. Dispositif selon l'une des revendications précédentes, **caractérisé en ce que** les disques (13, 20) sont supportés sur la périphérie intérieure de façon pivotante, de préférence en opposition pour l'engrènement d'entraînement.

24. Dispositif selon l'une des revendications précédentes, **caractérisé en ce que** les racleurs (22) sont disposés de façon à former, avec leur côté large (24) et une radiale, un angle (α) sensiblement constant de préférence compris entre 30° et 60°.

25. Dispositif selon l'une des revendications précédentes, **caractérisé en ce que** les racleurs (22) de disques (13, 20) adjacents sont conçus de manière à être décalés de 90° les uns par rapport aux autres.

26. Dispositif selon l'une des revendications précédentes, **caractérisé en ce que** des découpures (27) sont prévues dans le disque (13, 20) en amont et/ou en aval des racleurs (22).

27. Dispositif selon l'une des revendications précédentes, **caractérisé en ce que** les hauteurs des racleurs (22) définissent l'écartement de disques adjacents (13, 20).

28. Dispositif selon l'une des revendications précédentes, **caractérisé en ce que** les racleurs (22) sont réalisés de manière biseautée sur leur côté étroit (23) sur la face frontale dans la direction de mouvement.

29. Dispositif selon l'une des revendications précédentes, **caractérisé en ce qu'**un disque (13, 20) est réalisé d'une seule pièce avec les racleurs (22) formés sur celui-ci et avec les dentures d'entraînement (14, 18, 19) sous forme de pièce en matière plastique moulée par injection, et de préférence, en polyéthylène ou polypropylène.

30. Dispositif selon l'une des revendications précédentes, **caractérisé en ce que** les disques (13, 20) forment avec les organes de raclage (22) une partie d'un réacteur biologique de traitement d'eaux usées (35), les organes de raclage (22) éliminant l'accumulation de matières biologiques.

31. Dispositif selon l'une des revendications précédentes, **caractérisé en ce que** les disques forment avec les organes de raclage une partie d'un réacteur chimique, les organes de raclage éliminant au moins des parties d'un produit de réaction chimique.

32. Dispositif selon l'une des revendications précédentes, **caractérisé en ce que** les disques présentent des cavités sous forme de canaux, structures ou rugosités de surface.

33. Dispositif selon l'une des revendications précédentes, **caractérisé en ce que** les moyens à engrenages (17) pour la séquence de mouvements des organes de raclage (22) sont disposés à l'intérieur du réacteur et **en ce que** les moyens d'entraînement sont situés de préférence à l'extérieur du réacteur.

34. Dispositif selon l'une des revendications précédentes, **caractérisé en ce que** les moyens à engrenages et d'entraînement (41) pour la séquence des mouvements des organes de raclage sont disposés à l'extérieur du réacteur.

35. Dispositif selon l'une des revendications précédentes, **caractérisé en ce qu'**un empilage de disques est disposé de manière fixe à l'intérieur du réacteur et l'autre est entraîné.
